# EUROPEAN PATENT SPECIFICATION

(11) **EP 3 889 188 B1**
(45) Date of publication and mention of the grant of the patent: **03.08.2022**
(21) Application number: 20773576.2
(22) Date of filing: 12.03.2020
(51) Int. Cl.: C08K 5/39, C08K 5/47, C08C 19/20, C08C 19/22, C08F 136/18

(54) **SULFUR-MODIFIED CHLOROPRENE RUBBER, METHOD FOR PRODUCING SAME, SULFUR-MODIFIED CHLOROPRENE RUBBER COMPOSITION, VULCANIZED PRODUCT AND MOLDED ARTICLE**
SCHWEFELMODIFIZIERTER CHLOROPRENKAUTSCHUK, VERFAHREN ZU SEINER HERSTELLUNG, SCHWEFELMODIFIZIERTE CHLOROPREN-KAUTSCHUK-ZUSAMMENSETZUNG, VULKANISAT UND FORMKÖRPER
CAOUTCHOUC CHLOROPRÈNE MODIFIÉ PAR DU SOUFRE, PROCÉDÉ DE FABRICATION ASSOCIÉ, COMPOSITION DE CAOUTCHOUC CHLOROPRÈNE MODIFIÉ PAR DU SOUFRE, PRODUIT VULCANISÉ ET ARTICLE MOULÉ

(30) Priority: 20.03.2019 JP 2019052484
(43) Date of publication of application: 06.10.2021
(73) Proprietor: Denka Company Limited, Tokyo 103-8338 (JP)
(72) Inventor: KONDO Atsunori, Tokyo 103-8338 (JP); SUNADA Takashi, Tokyo 103-8338 (JP)
(74) Representative: Hoffmann Eitle
(86) International application number: PCT/JP2020/010882
(87) International publication number: WO 2020/189515

(56) References cited:
- EP-A1- 0 626 982
- WO-A1-2019/102898
- JP-A- H 093 120
- JP-A- H 093 120
- JP-A- S4 894 787
- JP-A- H07 504 221
- US-A- 3 775 390

## Description

### Technical Field

The present invention relates to a sulfur-modified chloroprene rubber, a method for producing the same, a sulfur-modified chloroprene rubber composition, a vulcanizate, and a molded article.

### Background Art

Sulfur-modified chloroprene rubbers have been widely used as materials for common industrial transmission belts or conveyor belts; automobile air springs; vibration-proof rubbers: sponges; and the like, while utilizing excellent dynamic properties of vulcanizates thereof. Since these products deform and return to their original shape repeatedly under dynamic stress, there are problems in that the rubbers themselves generate heat and deteriorate and in that product lifetime is shortened. Thus, there exists a craving for development of a sulfur-modified chloroprene rubber with reduced exothermicity.

As a technique of reducing the exothermicity of rubbers, known is a low-exothermicity rubber composition containing an elastomer such as an acrylonitrile-butadiene copolymer rubber, a metal salt of a,β-ethylenic unsaturated carboxylic acid, magnesium oxide having a BET specific surface area of 25 m²/g or less, and an organic peroxide-based crosslinking agent (see, for example, Patent Literature 1 below). Furthermore, known are a rubber composition containing a specific low-exothermicity carbon black with a rubber component (see, for example, Patent Literature 2 below) and a modified conjugated diene-based polymer obtained by mixing a high-molecular weight component having predetermined properties and a low-molecular weight component having predetermined properties (see, for example, Patent Literature 3 below).

### Citation List

### Patent Literature

Patent Literature 1: Japanese Unexamined Patent Publication No. H9-268239
Patent Literature 2: Japanese Unexamined Patent Publication No. H10-130424
Patent Literature 3: Japanese Unexamined Patent Publication No. 2010-121086
Patent Literature 4: Japanese Unexamined Patent Publication No. 2012-111899
Patent Literature 5: Japanese Unexamined Patent Publication No. 2016-141736

### Summary of Invention

### Technical Problem

Regarding the sulfur-modified chloroprene rubber, although a technique of improving physical properties of a vulcanizate thereof is being developed, exothermicity is demanded to be further reduced.

In this regard, an aspect of the present invention is intended to provide a sulfur-modified chloroprene rubber with which a vulcanizate with reduced exothermicity is obtained. Another aspect of the present invention is intended to provide a sulfur-modified chloroprene rubber composition containing the above-described sulfur-modified chloroprene rubber. Still another aspect of the present invention is intended to provide a vulcanizate of the above-described sulfur-modified chloroprene rubber. Still another aspect of the present invention is intended to provide a molded article made of the above-described vulcanizate (a molded article using the vulcanizate). Still another aspect of the present invention is intended to provide a method for producing the above-described sulfur-modified chloroprene rubber.

### Solution to Problem

The inventors of the present application have conducted intensive studies in order to solve such problems, and as a result, they have succeeded in producing a sulfur-modified chloroprene rubber with which a vulcanizate with reduced exothermicity is obtained, by introducing a specific structure in a molecular terminal of a sulfur-modified chloroprene rubber, thereby completing the present invention.

An aspect of the present invention provides a sulfur-modified chloroprene rubber having a functional group A represented by General Formula (A) below and positioned at a molecular terminal, in which a mass ratio B/A of a content of a functional group B represented by General Formula (B) below and positioned at a molecular terminal with respect to a content of the functional group A is 6.00 or less, and a total amount of the functional group A and the functional group B is 0.10 to 0.60% by mass. 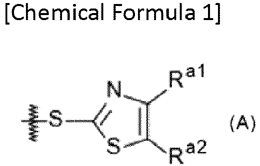 (In the formula, R^{a1} and R^{a2} each independently represent a hydrogen atom, a halogen atom, a hydroxy group, an alkoxy group, a carboxy group, a carboxylate group, a cyano group, an alkyl group which may have a substituent, or an arylthio group which may have a substituent, and R^{a1} and R^{a2} may bond with each other to form a ring which may have a substituent.) 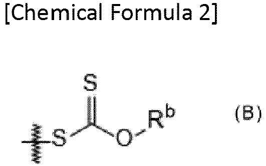 (In the formula, R^{b} represents a hydrogen atom or an alkyl group having 1 to 4 carbon atoms which may have a substituent.)

According to the sulfur-modified chloroprene rubber of the aspect of the present invention, a vulcanizate with reduced exothermicity can be obtained.

Another aspect of the present invention provides a sulfur-modified chloroprene rubber composition containing the aforementioned sulfur-modified chloroprene rubber. Still another aspect of the present invention provides a vulcanizate of the aforementioned sulfur-modified chloroprene rubber or a vulcanizate of the aforementioned sulfur-modified chloroprene rubber composition. Still another aspect of the present invention provides a molded article made of the aforementioned vulcanizate. Still another aspect of the present invention provides a method for producing the aforementioned sulfur-modified chloroprene rubber or a method for producing the sulfur-modified chloroprene rubber of the aforementioned sulfur-modified chloroprene rubber composition, the method having a step of subjecting chloroprene to emulsion polymerization in the presence of sulfur to obtain a polymer, and a mixing step of mixing the polymer and a thiazole.

### Advantageous Effects of Invention

According to an aspect of the present invention, it is possible to provide a sulfur-modified chloroprene rubber with which a vulcanizate with reduced exothermicity is obtained. According to another aspect of the present invention, it is possible to provide a sulfur-modified chloroprene rubber composition containing the above-described sulfur-modified chloroprene rubber. According to still another aspect of the present invention, it is possible to provide a vulcanizate of the above-described sulfur-modified chloroprene rubber. According to still another aspect of the present invention, it is possible to provide a molded article made of the above-described vulcanizate (a molded article using the vulcanizate). According to still another aspect of the present invention, it is possible to provide a method for producing the above-described sulfur-modified chloroprene rubber.

### Description of Embodiments

Hereinafter, preferred embodiments for carrying out the present invention will be described. Embodiments described below are only typical exemplary embodiments of the present invention and the scope of the present invention is not restricted thereby at all.

In the present specification, a numerical range that has been indicated by use of "to" indicates the range that includes the numerical values which are described before and after "to", as the minimum value and the maximum value, respectively. "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical value range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. An "alkyl group" may be linear, branched or cyclic, unless otherwise specified.

### <Sulfur-modified chloroprene rubber>

A sulfur-modified chloroprene rubber of the present embodiment has a functional group A represented by General Formula (A) below and positioned at a molecular terminal (hereinafter, referred to as "terminal functional group A"), in which a mass ratio B/A of a content of a functional group B represented by General Formula (B) below and positioned at a molecular terminal (hereinafter, referred to as "terminal functional group B") with respect to a content of the terminal functional group A is 6.00 or less, and a total amount of the terminal functional group A and the terminal functional group B is 0.10 to 0.60% by mass. That is, the sulfur-modified chloroprene rubber of the present embodiment is a sulfur-modified chloroprene rubber having at least one of a structure represented by General Formula (A) below and a structure represented by General Formula (B) below at a molecular terminal, in which the mass ratio B/A of the terminal functional group A represented by General Formula (A) below and the terminal functional group B represented by General Formula (B) below is 0 to 6.00, and the total amount (A + B) of the terminal functional group A and the terminal functional group B in 100 parts by mass of the sulfur-modified chloroprene rubber is 0.10 to 0.60 parts by mass. 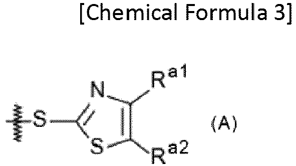 (In the formula, R^{a1} and R^{a2} each independently represent a hydrogen atom, a halogen atom, a hydroxy group, an alkoxy group, a carboxy group, a carboxylate group, a cyano group, an alkyl group which may have a substituent, or an arylthio group which may have a substituent, R^{a1} and R^{a2} may be identical to or different from each other, and R^{a1} and R^{a2} may bond with each other to form a ring which may have a substituent; R^{a1} and R^{a2} can bond with each other to form a ring which has a substituent or a ring which does not have a substituent.) 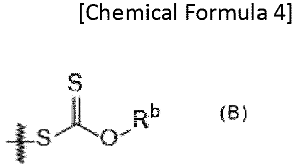 (In the formula, R^{b} represents a hydrogen atom or an alkyl group having 1 to 4 carbon atoms which may have a substituent.)

A vulcanizate can be obtained by vulcanizing the sulfur-modified chloroprene rubber of the present embodiment. According to the sulfur-modified chloroprene rubber of the present embodiment, a vulcanizate with reduced exothermicity (having excellent heat generation resistance) is obtained as a vulcanizate obtained by vulcanizing the sulfur-modified chloroprene rubber.

Incidentally, conventionally, there also exists a craving for development of a sulfur-modified chloroprene rubber excellent in compression set. As a technique of improving the compression set of a rubber, known is a chloroprene rubber composition containing 100 parts by mass in total of a chloroprene rubber and natural rubber, 0.1 to 10 parts by mass of a copolymer of styrene and butadiene, 0.1 to 3 parts by mass of ethylene thiourea, and 0.1 to 3 parts by mass of dipentamethylenethiuram tetrasulfide (see, for example, Patent Literature 4 above).

Further, as a technique of improving the scorch resistance of a chloroprene rubber, known is a rubber composition containing 100 parts by weight of a chloroprene rubber, 1 to 10 parts by weight of an amine salt of dithiocarbamic acid, and 0.1 to 5 parts by weight of at least one compound selected from the group consisting of a thiuram-based vulcanization accelerator, a guanidine-based vulcanization accelerator, a thiazole-based vulcanization accelerator, and a sulfenamide-based vulcanization accelerator (see, for example, Patent Literature 5 above).

However, conventionally, a technique of obtaining excellent scorch resistance while reducing compression set and exothermicity in a vulcanizate has not hitherto existed. On the other hand, the inventors of the present application have conducted intensive studies, and as a result, they have succeeded in producing a sulfur-modified chloroprene rubber with which a vulcanizate with excellent scorch resistance and reduced compression set and exothermicity is obtained, by introducing the aforementioned specific structure in a molecular terminal of a sulfur-modified chloroprene rubber. That is, according to the present embodiment, it is also possible to provide a sulfur-modified chloroprene rubber with which a vulcanizate with excellent scorch resistance and reduced compression set and exothermicity (having excellent compression set resistance and heat generation resistance) is obtained.

The sulfur-modified chloroprene rubber of the present embodiment is a polymer having a structural unit derived from chloroprene (2-chloro-1,3-butadiene). The sulfur-modified chloroprene rubber includes a sulfur atom in a molecule chain, and may include a sulfur atom in a main chain. The sulfur-modified chloroprene rubber may include a polysulfide bond (S₂ to S₈) in a molecule chain, and may include a polysulfide bond (S₂ to S₈) in a main chain.

The sulfur-modified chloroprene rubber of the present embodiment may have a structural unit derived from a monomer copolymerizable with chloroprene. Examples of the monomer copolymerizable with chloroprene include 2,3-dichloro-1,3-butadiene, 1-chloro-1,3-butadiene, styrene, acrylonitrile, methacrylonitrile, isoprene, butadiene, methacrylic acid, and esters. The monomer copolymerizable with chloroprene may be used alone or in combination of two or more kinds thereof.

For example, when 2,3-dichloro-1,3-butadiene among the monomers copolymerizable with chloroprene is used, the crystallization speed of a sulfur-modified chloroprene rubber to be obtained can be delayed. A sulfur-modified chloroprene rubber with a slow crystallization speed can maintain rubber elasticity even in a low-temperature environment, and for example, low-temperature compression set can be improved.

In the case of using the monomer copolymerizable with chloroprene, the used amount of the monomer copolymerizable with chloroprene (the content of the structural unit derived from the monomer copolymerizable with chloroprene) is preferably 10% by mass or less in all the monomers including chloroprene (the total amount of the structural units constituting the sulfur-modified chloroprene rubber). When this used amount is 10% by mass or less, the heat resistance of the sulfur-modified chloroprene rubber to be obtained is easily improved and deterioration in processability is easily suppressed. From the same viewpoints, the used amount of chloroprene (the content of the structural unit derived from chloroprene) is preferably 90% by mass or more, 92% by mass or more, 95% by mass or more, or 98% by mass or more in all the monomers including chloroprene (the total amount of the structural units constituting the sulfur-modified chloroprene rubber). An aspect in which the structural unit constituting the sulfur-modified chloroprene rubber is composed of the structural unit derived from chloroprene (substantially 100% by mass of the structural unit constituting the sulfur-modified chloroprene rubber is the structural unit derived from chloroprene) may be employed.

In the sulfur-modified chloroprene rubber of the present embodiment, the terminal functional group A may be positioned at the terminal of the main chain and/or the side chain. The terminal functional group A can be obtained, for example, by using a thiazole in a plasticization step described below. Examples of the substituent with respect to the alkyl group for R^{a1} or R^{a2} include a halogen atom, a hydroxy group, an alkoxy group, a carboxy group, a carboxylate group, a cyano group, a sulfo group, a sulfonate group, a nitro group, and an amino group. Examples of the substituent with respect to the arylthio group for R^{a1} or R^{a2} include an alkyl group, a halogen atom, a hydroxy group, an alkoxy group, a carboxy group, a carboxylate group, a cyano group, a sulfo group, a sulfonate group, a nitro group, and an amino group.

In the terminal functional group A, R^{a1} and R^{a2} may bond with each other to form a ring which may have a substituent. Examples of the ring include an aromatic ring, an alicyclic ring, and a heterocyclic ring. Examples of the substituent with respect to the ring include an alkyl group, a halogen atom, a hydroxy group, an alkoxy group, a carboxy group, a carboxylate group, a cyano group, a sulfo group, a sulfonate group, a nitro group, and an amino group. Examples of the alkyl group that is a substituent with respect to the ring include an alkyl group having 1, 2, 3, or 4 carbon atoms. From the viewpoint of easily obtaining a vulcanizate having excellent scorch resistance and having reduced compression set and exothermicity, the terminal functional group A preferably has a benzothiazole ring formed by R^{a1} and R^{a2} bonding with each other. The benzothiazole ring may not have a substituent. In a case where the benzothiazole ring has a substituent, the substituent is preferably an alkyl group, and more preferably an alkyl group bonded in 4-position of the benzothiazole ring, from the viewpoint of easily obtaining a vulcanizate having excellent scorch resistance and having reduced compression set and exothermicity.

The sulfur-modified chloroprene rubber of the present embodiment may have the terminal functional group B, and may not have the terminal functional group B. The terminal functional group B may be positioned at the terminal of the main chain and/or the side chain. The terminal functional group B can be obtained, for example, by using an alkylxanthogen disulfide in a plasticization step described below. Examples of the substituent with respect to the alkyl group for R^{b} include a halogen atom, a hydroxy group, an alkoxy group, a carboxy group, a carboxylate group, a cyano group, a sulfo group, a sulfonate group, a nitro group, and an amino group. The alkyl group for R^{b} may not have a substituent.

From the viewpoint of easily obtaining a vulcanizate having excellent scorch resistance and having reduced compression set and exothermicity, R^{b} is preferably an alkyl group having 1 to 4 carbon atoms, more preferably an alkyl group having 1 to 3 carbon atoms, and further preferably an alkyl group having 2 or 3 carbon atoms.

The content of the terminal functional group A is preferably in the following range on the basis of the total amount of the sulfur-modified chloroprene rubber (that is, the sulfur-modified chloroprene rubber preferably contains the following numerical value content (unit: parts by mass) of the terminal functional group A with respect to 100 parts by mass of the sulfur-modified chloroprene rubber). The content of the terminal functional group A is preferably 0.50% by mass or less, 0.45% by mass or less, 0.42% by mass or less, 0.40% by mass or less, 0.38% by mass or less, 0.35% by mass or less, 0.30% by mass or less, 0.25% by mass or less, or 0.23% by mass or less, from the viewpoints of improving the scorch resistance of a vulcanizate to be obtained and further reducing the compression set and the exothermicity. The content of the terminal functional group A is preferably 0.01% by mass or more, 0.03% by mass or more, 0.04% by mass or more, 0.05% by mass or more, 0.06% by mass or more, or 0.08% by mass or more, from the viewpoints of improving the scorch resistance of a vulcanizate to be obtained and further reducing the compression set and the exothermicity. From these viewpoints, the content of the terminal functional group A is preferably 0.01 to 0.50% by mass or 0.05 to 0.40% by mass. The content of the terminal functional group A may be 0.20% by mass or less, 0.18% by mass or less, 0.16% by mass or less, 0.15% by mass or less, 0.14% by mass or less, 0.13% by mass or less, 0.12% by mass or less, 0.11% by mass or less, 0.10% by mass or less, 0.09% by mass or less, 0.08% by mass or less, 0.07% by mass or less, 0.06% by mass or less, 0.05% by mass or less, or 0.04% by mass or less. The content of the terminal functional group A may be 0.09% by mass or more, 0.10% by mass or more, 0.11% by mass or more, 0.12% by mass or more, 0.13% by mass or more, 0.14% by mass or more, 0.15% by mass or more, 0.16% by mass or more, 0.18% by mass or more, 0.20% by mass or more, 0.23% by mass or more, 0.25% by mass or more, 0.30% by mass or more, 0.35% by mass or more, 0.38% by mass or more, 0.40% by mass or more, or 0.42% by mass or more. The content of the terminal functional group A can be adjusted by the amount of the thiazole used in the plasticization step described below, the plasticization time and the plasticization temperature of the plasticization step, and the like.

The content of the terminal functional group B is not particularly limited, and is preferably in the following range on the basis of the total amount of the sulfur-modified chloroprene rubber (that is, the sulfur-modified chloroprene rubber preferably contains the following numerical value content (unit: parts by mass) of the terminal functional group B with respect to 100 parts by mass of the sulfur-modified chloroprene rubber). The content of the terminal functional group B is preferably 0.50% by mass or less, 0.45% by mass or less, 0.40% by mass or less, 0.35% by mass or less, 0.30% by mass or less, 0.28% by mass or less, 0.25% by mass or less, 0.23% by mass or less, 0.21% by mass or less, 0.20% by mass or less, 0.17% by mass or less, 0.16% by mass or less, 0.15% by mass or less, 0.14% by mass or less, 0.13% by mass or less, 0.12% by mass or less, 0.10% by mass or less, 0.09% by mass or less, or 0.07% by mass or less, from the viewpoints of improving the scorch resistance of a vulcanizate to be obtained and further reducing the compression set and the exothermicity. The content of the terminal functional group B may be 0% by mass and may be more than 0% by mass. From these viewpoints, the content of the terminal functional group B is preferably 0 to 0.50% by mass or 0 to 0.40% by mass. In a case where the content of the terminal functional group B is more than 0% by mass, the content thereof is preferably 0.01% by mass or more, 0.03% by mass or more, 0.05% by mass or more, 0.06% by mass or more, or 0.07% by mass or more, from the viewpoint of easily obtaining a vulcanizate having excellent scorch resistance and having reduced compression set and exothermicity. The content of the terminal functional group B may be 0.06% by mass or less, 0.05% by mass or less, 0.03% by mass or less, or 0.01% by mass or less. The content of the terminal functional group B may be 0.09% by mass or more, 0.10% by mass or more, 0.12% by mass or more, 0.13% by mass or more, 0.14% by mass or more, 0.15% by mass or more, 0.16% by mass or more, 0.17% by mass or more, 0.20% by mass or more, 0.21% by mass or more, 0.23% by mass or more, 0.25% by mass or more, 0.28% by mass or more, 0.30% by mass or more, or 0.35% by mass or more. The content of the terminal functional group B can be adjusted by the amount of the alkylxanthogen disulfide used in the plasticization step described below, the plasticization time and the plasticization temperature of the plasticization step, and the like.

The mass ratio B/A of the content of the terminal functional group B with respect to the content of the terminal functional group A is 6.00 or less (0 to 6.00). When the mass ratio B/A is more than 6.00, the scorch resistance, the compression set resistance, and the heat generation resistance of a vulcanizate to be obtained are deteriorated.

The mass ratio B/A is preferably 5.50 or less, 5.00 or less, 4.70 or less, 4.50 or less, 4.00 or less, 3.50 or less, 3.00 or less, 2.50 or less, 2.00 or less, 1.50 or less, 1.00 or less, 0.90 or less, 0.50 or less, 0.40 or less, or 0.30 or less, from the viewpoint of easily obtaining a vulcanizate having excellent scorch resistance and having reduced compression set and exothermicity. The mass ratio B/A may be 0.29 or less, 0.25 or less, 0.20 or less, or 0.10 or less. The mass ratio B/A is preferably more than 0 and is preferably 0.10 or more, 0.20 or more, 0.25 or more, 0.29 or more, or 0.30 or more, from the viewpoint of easily obtaining a vulcanizate having excellent scorch resistance and having reduced compression set and exothermicity. The mass ratio B/A is preferably more than 0 and 6.00 or less. The mass ratio B/A may be 0.35 or more, 0.40 or more, 0.50 or more, 0.90 or more, 1.00 or more, 1.50 or more, 2.00 or more, 2.50 or more, 3.00 or more, 3.50 or more, 4.00 or more, 4.50 or more, 4.70 or more, 5.00 or more, or 5.50 or more.

The total amount of the terminal functional group A and the terminal functional group B (the total of the contents of the terminal functional group A and the terminal functional group B; the mass total (A + B)) is 0.10 to 0.60% by mass on the basis of the total amount of the sulfur-modified chloroprene rubber. When the mass total (A + B) is less than 0.10% by mass, the scorch resistance, the compression set resistance, and the heat generation resistance of a vulcanizate to be obtained are deteriorated. When the mass total (A + B) is more than 0.60% by mass, a decrease in Mooney viscosity of a sulfur-modified chloroprene rubber composition to be obtained is significant, which is not practical (a vulcanizate is not obtained).

The mass total (A + B) is preferably in the following range on the basis of the total amount of the sulfur-modified chloroprene rubber. The mass total (A + B) is preferably 0.15% by mass or more, 0.19% by mass or more, 0.20% by mass or more, 0.25% by mass or more, 0.27% by mass or more, 0.28% by mass or more, or 0.29% by mass or more, from the viewpoint of easily obtaining a vulcanizate having excellent scorch resistance and having reduced compression set and exothermicity. The mass total (A + B) may be 0.30% by mass or more, 0.32% by mass or more, 0.34% by mass or more, 0.35% by mass or more, 0.40% by mass or more, 0.45% by mass or more, 0.46% by mass or more, 0.47% by mass or more, 0.50% by mass or more, 0.52% by mass or more, 0.53% by mass or more, or 0.54% by mass or more. The mass total (A + B) is preferably 0.55% by mass or less, 0.54% by mass or less, 0.53% by mass or less, 0.52% by mass or less, 0.50% by mass or less, 0.47% by mass or less, 0.46% by mass or less, 0.45% by mass or less, 0.40% by mass or less, 0.35% by mass or less, 0.34% by mass or less, 0.32% by mass or less, or 0.30% by mass or less, from the viewpoint of easily obtaining a vulcanizate with reduced compression set and exothermicity. The mass total (A + B) may be 0.29% by mass or less, 0.28% by mass or less, 0.27% by mass or less, 0.25% by mass or less, 0.20% by mass or less, or 0.19% by mass or less.

The contents of the terminal functional group A and the terminal functional group B in the sulfur-modified chloroprene rubber can be quantified by the procedure described in Examples.

The sulfur-modified chloroprene rubber of the present embodiment may not have a functional group represented by General Formula (C) below, and may not have a functional group represented by General Formula (C) below and positioned at a molecular terminal. 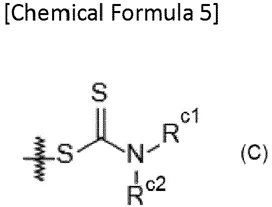 (In the formula, R^{c1} and R^{c2} each independently represent an alkyl group which may have a substituent or an aryl group which may have a substituent.)

### <Method for producing sulfur-modified chloroprene rubber>

A method for producing the sulfur-modified chloroprene rubber of the present embodiment is a method for producing the sulfur-modified chloroprene rubber of the present embodiment or a production method for obtaining the sulfur-modified chloroprene rubber of a sulfur-modified chloroprene rubber composition described below. The method for producing the sulfur-modified chloroprene rubber of the present embodiment has a polymerization step of subjecting chloroprene to emulsion polymerization in the presence of sulfur (S₈) to obtain a polymer, and a plasticization step (mixing step) of mixing the above-described polymer and a thiazole. In the method for producing the sulfur-modified chloroprene rubber of the present embodiment, a sulfur-modified chloroprene rubber may be obtained as a constituent of the sulfur-modified chloroprene rubber composition. An aspect of the method for producing the sulfur-modified chloroprene rubber of the present embodiment has a polymerization step of subjecting at least chloroprene rubber and sulfur to emulsion polymerization to obtain a polymer solution and a plasticization step of plasticizing a polymer in the polymer solution by adding a thiazole into the polymer solution.

In the method for producing the sulfur-modified chloroprene rubber of the present embodiment, for example, sulfur can be introduced in the polymer (for example, the main chain of the polymer), and a polysulfide bond (S₂ to S₈) can also be introduced. The sulfur-modified chloroprene rubber of the present embodiment encompasses a latex obtained by using a thiazole to plasticize a sulfur-modified chloroprene polymer containing an introduced-sulfur, which is obtained, in the presence of sulfur, by subjecting a single substance of chloroprene to emulsion polymerization or by subjecting chloroprene and another monomer to emulsion polymerization, and a sulfur-modified chloroprene rubber obtained by drying and washing this latex by a general method.

Hereinafter, the detailed description will be given along the method for producing the sulfur-modified chloroprene rubber.

### (Polymerization step)

In the method for producing the sulfur-modified chloroprene rubber of the present embodiment, first, in the polymerization step, chloroprene is subjected to emulsion polymerization in the presence of sulfur to obtain a polymer. The polymer may be a polymer in a polymer solution. In the polymerization step, as necessary, chloroprene and the aforementioned monomer copolymerizable with chloroprene may be subjected to emulsion polymerization. The used amount of chloroprene or the used amount of the monomer copolymerizable with chloroprene is preferably the aforementioned used amount.

The used amount of sulfur (S₈) in the emulsion polymerization is preferably in the following range with respect to 100 parts by mass of monomers (the total of monomers to be polymerized). The used amount of sulfur is preferably 0.01 parts by mass or more and more preferably 0.1 parts by mass or more, from the viewpoint of easily obtaining sufficient mechanical properties or dynamic properties of a sulfur-modified chloroprene rubber to be obtained. The used amount of sulfur is preferably 0.6 parts by mass or less and more preferably 0.5 parts by mass or less, from the viewpoint of easy processing by suppression of an excessive increase in adhesion of a sulfur-modified chloroprene rubber to be obtained to a metal. From these viewpoints, the used amount of sulfur is preferably 0.01 to 0.6 parts by mass and more preferably 0.1 to 0.5 parts by mass.

As an emulsifier used in emulsion polymerization, one or two or more kinds of known emulsifiers, which can be used in emulsion polymerization of chloroprene, can be freely selected and used. Examples of the emulsifier include rosin acids, fatty acids, a metal salt of aromatic sulfonic acid formalin condensate, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate. From the viewpoint of easily obtaining a vulcanizate having excellent scorch resistance and having reduced compression set and exothermicity, the emulsifier is preferably rosin acids. The "rosin acids" mean rosin acid, disproportionated rosin acid, alkali metal salts of disproportionated rosin acid (for example, disproportionated potassium rosinate), and the like. Examples of the constituent of disproportionated rosin acid include sesquiterpene, 8,5-isopimaric acid, dihydropimaric acid, secodehydroabietic acid, dihydroabietic acid, deisopropyldehydroabietic acid, and demethyldehydroabietic acid. Examples of the fatty acids include fatty acids (for example, saturated or unsaturated fatty acids having 6 to 22 carbon atoms) and metal salts of fatty acids (for example, sodium laurylsulfate).

From the viewpoint of easily obtaining a vulcanizate having excellent scorch resistance and having reduced compression set and exothermicity, the emulsifier is preferably a metal salt of aromatic sulfonic acid formalin condensate and more preferably a sodium salt of β-naphthalene sulfonic acid formalin condensate. The sodium salt of β-naphthalene sulfonic acid formalin condensate is an emulsifier which is commonly used, stability is improved by adding a small amount thereof, and a latex can be stably produced without aggregation and precipitation in the production process. As another emulsifier which is suitably used, for example, an aqueous alkali soap solution composed of a mixture of alkali metal salts of disproportionated rosin acid and saturated or unsaturated fatty acids having 6 to 22 carbon atoms is mentioned.

The pH of the emulsion (for example, the aqueous emulsion) at the time of emulsion polymerization initiation is preferably 10.5 or more. Herein, the "emulsion" is a liquid mixture of chloroprene and other components (such as a monomer copolymerizable with chloroprene, an emulsifier, and sulfur (S₈)) immediately before emulsion polymerization initiation. The "emulsion" also encompasses a case where the composition sequentially varies by adding these other components (such as a monomer copolymerizable with chloroprene, and sulfur (S₈)) afterward, portionwise, etc. When the pH of the emulsion is 10.5 or more, polymer precipitation or the like during polymerization is prevented so that the polymerization can be stably controlled. This effect can be particularly suitably obtained in the case of using rosin acids as an emulsifier. The pH of the emulsion can be adjusted by the amount of the alkali component such as sodium hydroxide or potassium hydroxide, which is present during emulsion polymerization.

The polymerization temperature of emulsion polymerization is preferably 0°C to 55°C and more preferably 30°C to 55°C, from the viewpoint of excellent polymerization regulation and productivity.

As a polymerization initiator, potassium persulfate, benzoyl peroxide, ammonium persulfate, hydrogen peroxide, or the like, which is usually used in radical polymerization, can be used. For example, the polymerization is performed in the following polymerization rate (conversion rate) range and then is terminated by adding a polymerization terminator (polymerization inhibitor).

The polymerization rate is preferably 60% or more and more preferably 70% or more, from the viewpoint of excellent productivity. The polymerization rate is preferably 95% or less and more preferably 90% or less, from the viewpoint of suppressing the development of the branched structure or gel formation affecting processability of a sulfur-modified chloroprene rubber to be obtained. From these viewpoints, the polymerization rate is preferably 60 to 95% and more preferably 70 to 90%.

Examples of the polymerization terminator include diethylhydroxyamine, thiodiphenylamine, 4-tert-butylcatechol, and 2,2'-methylenebis-4-methyl-6-tert-butylphenol. The polymerization terminator may be used alone or in combination of two or more kinds thereof.

### (Plasticization step)

In the plasticization step, the polymer obtained in the polymerization step and a thiazole are mixed. In the plasticization step, by reacting the polymer obtained in the polymerization step and a thiazole with each other, the polymer can be plasticized, and for example, by adding a thiazole into the polymer solution obtained in the polymerization step, the polymer in the polymer solution can be plasticized. In the plasticization step, for example, sulfur (for example, a polysulfide bond (S₂ to S₈)) and a thiazole present in the polymer (for example, the main chain of the polymer) are reacted with each other, and thereby the polymer can be cut or depolymerized while the aforementioned terminal functional group A derived from a thiazole is formed. Hereinafter, chemicals used for cutting or depolymerization of the polymer are referred to as "plasticizer". A vulcanizate obtained by vulcanizing the sulfur-modified chloroprene rubber obtained by the plasticization step has favorable scorch resistance and balance of physical properties of the compression set and the exothermicity of a vulcanizate to be obtained is favorable.

As the thiazole, one or two or more kinds of known thiazoles can be freely selected and used. From the viewpoint of easily obtaining a vulcanizate having excellent scorch resistance and having reduced compression set and exothermicity, the thiazole preferably includes at least one compound selected from N-cyclohexyl-2-benzothiazole sulfenamide, N-cyclohexyl-4-methyl-2-benzothiazole sulfenamide, N-cyclohexyl-4,5-dimethyl-2-benzothiazole sulfenamide, N,N-dicyclohexyl-1,3-benzothiazole-2-sulfenamide, N-(tert-butyl)-2-benzothiazole sulfenamide, N,N-diisopropyl-2-benzothiazole sulfenamide, 4,5-dihydrothiazol-2-sulfenamide, N-cyclohexyl-4,5-dihydrothiazol-2-sulfenamide, N-oxydiethyl benzothiazole-2-sulfenamide, 2-(4'-morpholinyldithio)benzothiazole, 2-mercaptobenzothiazole, 4,5-dihydro-2-mercaptothiazole, dibenzylthiazolyl disulfide, and 2-(morpholinodithio)benzothiazole. From the viewpoint of easily obtaining a vulcanizate having excellent scorch resistance and having reduced compression set and exothermicity, the thiazole preferably includes benzothiazole.

The used amount (addition amount) of the thiazole is preferably 0.2 to 3 parts by mass with respect to 100 parts by mass of the polymer (for example, the polymer in the polymer solution). When the used amount of the thiazole is 0.2 parts by mass or more, the scorch resistance of a vulcanizate to be obtained is easily improved and the compression set is easily reduced. When the used amount of the thiazole is 3 parts by mass or less, a sulfur-modified chloroprene rubber composition having an appropriate Mooney viscosity is easily obtained, and as a result, vulcanization moldability is easily improved. When the used amount of the thiazole is 0.2 to 3 parts by mass, the content of the terminal functional group A in the sulfur-modified chloroprene rubber is easily adjusted to 0.01 to 0.50% by mass (for example, 0.05 to 0.40% by mass; basis: the total amount of the sulfur-modified chloroprene rubber), and the content (residual amount) of the thiazole in the sulfur-modified chloroprene rubber composition is easily adjusted to 0.0001 to 0.0200 parts by mass (for example, 0.0005 to 0.0100 parts by mass; basis: 100 parts by mass of the sulfur-modified chloroprene rubber).

In the plasticization step, as a plasticizer, a thiazole and an alkylxanthogen disulfide can be used in combination. In the plasticization step, the polymer obtained in the polymerization step, the thiazole, and the alkylxanthogen disulfide can be mixed, and the polymer obtained in the polymerization step, the thiazole, and the alkylxanthogen disulfide can be reacted with one another. Thereby, the alkylxanthogen disulfide reacts with the thiazole to form a reactant having higher reactivity with sulfur (for example, a polysulfide bond) in the polymer rather than that in the case of using a single substance of a thiazole or a single substance of an alkylxanthogen disulfide, and thus the Mooney viscosity can be easily adjusted. The reactant reacts with sulfur in the polymer (for example, a polysulfide bond; for example, sulfur in the main chain of the polymer), and thereby the aforementioned terminal functional group A derived from the thiazole and the aforementioned terminal functional group B derived from the alkylxanthogen disulfide can be suitably formed.

As the alkylxanthogen disulfide, one or two or more kinds of known alkylxanthogen disulfides can be freely selected and used. From the viewpoint of easily obtaining a vulcanizate having excellent scorch resistance and having reduced compression set and exothermicity, the alkylxanthogen disulfide preferably includes dialkylxanthogen disulfide, more preferably includes dialkylxanthogen disulfide in which the number of carbon atoms of at least one alkyl group is 1 to 6, and further preferably includes dialkylxanthogen disulfide in which the number of carbon atoms of at least one alkyl group is 2 to 4. From the viewpoint of easily obtaining a vulcanizate having excellent scorch resistance and having reduced compression set and exothermicity, the alkylxanthogen disulfide preferably includes at least one compound selected from dimethylxanthogen disulfide, diethylxanthogen disulfide, dipropylxanthogen disulfide, diisopropylxanthogen disulfide, and dibutylxanthogen disulfide.

The used amount (addition amount) of the alkylxanthogen disulfide is not particularly limited, and is preferably 0 to 6 parts by mass, more preferably more than 0 parts by mass and 6 parts by mass or less, and further preferably 0.5 to 3 parts by mass, with respect to 100 parts by mass of the polymer (for example, the polymer in the polymer solution). When the used amount of the alkylxanthogen disulfide is within these ranges, the Mooney viscosity of a sulfur-modified chloroprene rubber composition to be obtained is further easily controlled, the scorch resistance of a vulcanizate to be obtained is further improved, and the compression set and the exothermicity are further reduced. When the used amount of the alkylxanthogen disulfide is 0 to 6 parts by mass, the content of the terminal functional group B in the sulfur-modified chloroprene rubber is easily adjusted to 0.50% by mass or less (for example, 0.40% by mass or less; basis: the total amount of the sulfur-modified chloroprene rubber), and the content (residual amount) of the alkylxanthogen disulfide in the sulfur-modified chloroprene rubber composition is easily adjusted to 2.00 parts by mass or less (for example, 1.50 parts by mass or less; basis: 100 parts by mass of the sulfur-modified chloroprene rubber).

The sulfur-modified chloroprene rubber may be obtained by performing cooling, pH adjusting, freezing, drying, or the like of the polymer solution subjected to the above-described plasticization step by a general method.

### <Sulfur-modified chloroprene rubber composition, vulcanizate, and molded article>

The sulfur-modified chloroprene rubber composition of the present embodiment contains the sulfur-modified chloroprene rubber of the present embodiment and further contains components other than the sulfur-modified chloroprene rubber. The sulfur-modified chloroprene rubber composition of the present embodiment may contain an unreacted plasticizer (such as a thiazole or an alkylxanthogen disulfide). As the plasticizer, the plasticizer mentioned above in the plasticization step can be used.

The content of the thiazole (the total amount of compounds corresponding to a thiazole; for example, the residual amount) in the sulfur-modified chloroprene rubber composition is preferably in the following range with respect to 100 parts by mass of the sulfur-modified chloroprene rubber. Furthermore, the content of a specific thiazole (for example, each thiazole exemplified as mentioned above; such as N-cyclohexyl-2-benzothiazole sulfenamide or N-cyclohexyl-4-methyl-2-benzothiazole sulfenamide) in the sulfur-modified chloroprene rubber composition is preferably in the following range with respect to 100 parts by mass of the sulfur-modified chloroprene rubber. The content of the thiazole (for example, the residual amount of an unreacted thiazole) can be adjusted by the amount of the thiazole used in the plasticization step, the plasticization time and the plasticization temperature of the plasticization step, and the like.

The content of the thiazole is preferably 0.0001 parts by mass or more, 0.0003 parts by mass or more, 0.0004 parts by mass or more, 0.0005 parts by mass or more, 0.0006 parts by mass or more, 0.0010 parts by mass or more, 0.0015 parts by mass or more, 0.0020 parts by mass or more, 0.0024 parts by mass or more, 0.0025 parts by mass or more, or 0.0028 parts by mass or more, from the viewpoints of improving the scorch resistance of a vulcanizate to be obtained and further reducing the compression set and the exothermicity. The content of the thiazole is preferably 0.0200 parts by mass or less, 0.0150 parts by mass or less, 0.0100 parts by mass or less, 0.0090 parts by mass or less, 0.0080 parts by mass or less, 0.0070 parts by mass or less, 0.0060 parts by mass or less, 0.0055 parts by mass or less, or 0.0054 parts by mass or less, from the viewpoints of improving the scorch resistance of a vulcanizate to be obtained and further reducing the compression set and the exothermicity. From these viewpoints, the content of the thiazole is preferably 0.0001 to 0.0200 parts by mass or 0.0005 to 0.0100 parts by mass. The content of the thiazole is preferably 0.0030 parts by mass or more, 0.0033 parts by mass or more, 0.0035 parts by mass or more, 0.0040 parts by mass or more, 0.0041 parts by mass or more, 0.0045 parts by mass or more, 0.0050 parts by mass or more, or 0.0054 parts by mass or more, from the viewpoint of easily obtaining further excellent scorch resistance in a vulcanizate while reducing the compression set and the exothermicity. The content of the thiazole may be 0.0055 parts by mass or more, 0.0060 parts by mass or more, 0.0070 parts by mass or more, 0.0080 parts by mass or more, 0.0090 parts by mass or more, or 0.0100 parts by mass or more. The content of the thiazole may be 0.0050 parts by mass or less, 0.0045 parts by mass or less, 0.0041 parts by mass or less, 0.0040 parts by mass or less, 0.0035 parts by mass or less, 0.0033 parts by mass or less, 0.0030 parts by mass or less, 0.0028 parts by mass or less, 0.0025 parts by mass or less, 0.0024 parts by mass or less, 0.0020 parts by mass or less, 0.0015 parts by mass or less, 0.0010 parts by mass or less, 0.0006 parts by mass or less, 0.0005 parts by mass or less, or 0.0004 parts by mass or less.

The content of the alkylxanthogen disulfide (the total amount of compounds corresponding to an alkylxanthogen disulfide; for example, the residual amount) in the sulfur-modified chloroprene rubber composition is preferably in the following range with respect to 100 parts by mass of the sulfur-modified chloroprene rubber. Furthermore, the content of a specific alkylxanthogen disulfide (for example, each alkylxanthogen disulfide exemplified as mentioned above; such as diisopropylxanthogen disulfide or diethylxanthogen disulfide) in the sulfur-modified chloroprene rubber composition is preferably in the following range with respect to 100 parts by mass of the sulfur-modified chloroprene rubber. The content of the alkylxanthogen disulfide (for example, the residual amount of an unreacted alkylxanthogen disulfide) can be adjusted by the amount of the alkylxanthogen disulfide used in the plasticization step, the plasticization time and the plasticization temperature of the plasticization step, and the like.

The content of the alkylxanthogen disulfide is preferably 2.00 parts by mass or less, 1.80 parts by mass or less, 1.50 parts by mass or less, 1.40 parts by mass or less, 1.00 part by mass or less, 0.90 parts by mass or less, 0.80 parts by mass or less, 0.75 parts by mass or less, 0.70 parts by mass or less, 0.60 parts by mass or less, 0.56 parts by mass or less, 0.55 parts by mass or less, 0.50 parts by mass or less, 0.40 parts by mass or less, 0.30 parts by mass or less, 0.25 parts by mass or less, or 0.24 parts by mass or less, from the viewpoint of easily obtaining a vulcanizate having excellent scorch resistance and having reduced compression set and exothermicity. The content of the alkylxanthogen disulfide may be 0 parts by mass and may be more than 0 parts by mass. From these viewpoints, the content of the alkylxanthogen disulfide is preferably 0 to 2.00 parts by mass or 0 to 1.50 parts by mass. In a case where the content of the alkylxanthogen disulfide is more than 0 parts by mass, the content thereof is preferably 0.01 parts by mass or more, 0.05 parts by mass or more, 0.10 parts by mass or more, 0.20 parts by mass or more, 0.21 parts by mass or more, or 0.24 parts by mass or more, from the viewpoint of easily obtaining a vulcanizate having excellent scorch resistance and having reduced compression set and exothermicity. The content of the alkylxanthogen disulfide may be 0.21 parts by mass or less, 0.20 parts by mass or less, 0.10 parts by mass or less, 0.05 parts by mass or less, or 0.01 parts by mass or less. The content of the alkylxanthogen disulfide may be 0.25 parts by mass or more, 0.30 parts by mass or more, 0.40 parts by mass or more, 0.50 parts by mass or more, 0.55 parts by mass or more, 0.56 parts by mass or more, 0.60 parts by mass or more, 0.70 parts by mass or more, 0.75 parts by mass or more, 0.80 parts by mass or more, 0.90 parts by mass or more, 1.00 part by mass or more, 1.40 parts by mass or more, or 1.50 parts by mass or more.

In the sulfur-modified chloroprene rubber composition, the mass ratio D/C of the content (for example, residual amount) D of the alkylxanthogen disulfide with respect to the content (for example, residual amount) C of the thiazole is preferably in the following range. The mass ratio D/C is preferably 1500 or less, 1200 or less, 1000 or less, 900 or less, 800 or less, 600 or less, 500 or less, 300 or less, 200 or less, 150 or less, or 120 or less, from the viewpoint of further favorable balance of physical properties of the scorch resistance, the compression set, and the exothermicity of a vulcanizate to be obtained. The mass ratio D/C is 0 or more, and from the viewpoint of further favorable balance of physical properties of the scorch resistance, the compression set, and the exothermicity of a vulcanizate to be obtained, the mass ratio D/C is preferably more than 0 and more preferably 5 or more, 10 or more, 30 or more, or 40 or more. From these viewpoints, the mass ratio D/C is preferably 0 to 1500 or 0 to 1000. The mass ratio D/C may be 110 or less, 100 or less, 80 or less, 75 or less, 74 or less, 50 or less, 45 or less, 40 or less, 30 or less, 10 or less, or 5 or less. The mass ratio D/C may be 45 or more, 50 or more, 74 or more, 75 or more, 80 or more, 100 or more, 110 or more, 120 or more, 150 or more, 200 or more, 300 or more, 500 or more, 600 or more, 800 or more, 900 or more, 1000 or more, or 1200 or more.

The content of the thiazole and the content of the alkylxanthogen disulfide in the sulfur-modified chloroprene rubber composition can be quantified by the procedure described in Examples.

The sulfur-modified chloroprene rubber composition may contain additives such as a vulcanizing agent, a processing aid, a stabilizer, a metal compound, a plasticizer, or a filler.

Examples of the vulcanizing agent include a metal oxide. Examples of the metal oxide include zinc oxide, magnesium oxide, lead oxide, trilead tetraoxide, iron trioxide, titanium dioxide, calcium oxide, and hydrotalcite. The vulcanizing agent may be used alone or in combination of two or more kinds thereof. The content of the vulcanizing agent is preferably 3 to 15 parts by mass with respect to 100 parts by mass of the sulfur-modified chloroprene rubber.

Examples of the processing aid include fatty acids such as stearic acid; paraffin-based processing aids such as polyethylene; and fatty acid amides. The processing aid may be used alone or in combination of two or more kinds thereof. The content of the processing aid is preferably 0.5 to 5 parts by mass with respect to 100 parts by mass of the sulfur-modified chloroprene rubber.

The sulfur-modified chloroprene rubber composition can contain a stabilizer (for example, a small amount of a stabilizer) for preventing a change in Mooney viscosity during storage. As a stabilizer, one or two or more kinds of known stabilizers, which can be used in the chloroprene rubber, can be freely selected and used. Examples of the stabilizer include phenyl-α-naphthylamine, octylated diphenylamine, 2,6-di-tert-butyl-4-phenylphenol, 2,2'-methylenebis(4-methyl-6-tert-butylphenol), and 4,4'-thiobis-(6-tert-butyl-3-methylphenol). As the stabilizer, from the viewpoint of easily obtaining a vulcanizate having excellent scorch resistance and having reduced compression set and exothermicity, at least one selected from octylated diphenylamine and 4,4'-thiobis-(6-tert-butyl-3-methylphenol is preferred.

A metal compound is a compound which can be added for adjusting the vulcanization rate of the sulfur-modified chloroprene rubber or suppressing the degradation of the sulfur-modified chloroprene rubber by adsorbing chlorine sources such as hydrogen chloride generated by dehydrochlorination reaction of the sulfur-modified chloroprene rubber. As the metal compound, oxides, hydroxides, or the like of zinc, titanium, magnesium, lead, iron, beryllium, calcium, barium, germanium, zirconium, vanadium, molybdenum, tungsten, or the like can be used. The metal compound may be used alone or in combination of two or more kinds thereof.

The content of the metal compound is not particularly limited, and is preferably in a range of 3 to 15 parts by mass with respect to 100 parts by mass of the sulfur-modified chloroprene rubber. When the content of the metal compound is adjusted to this range, the mechanical strength of a sulfur-modified chloroprene rubber composition to be obtained can be improved.

A plasticizer is a component which can be added for lowering the hardness of the sulfur-modified chloroprene rubber and improving low-temperature properties thereof. Furthermore, when a sponge is produced using the sulfur-modified chloroprene rubber composition, the texture of this sponge can also be improved. Examples of the plasticizer include dioctyl phthalate, dioctyl adipate {also known as bis(2-ethylhexyl) adipate}, white oils, silicone oils, naphthene oils, aroma oils, triphenyl phosphate, and tricresyl phosphate. The plasticizer may be used alone or in combination of two or more kinds thereof.

The content of the plasticizer is not particularly limited, and is preferably in a range of 50 parts by mass or less with respect to 100 parts by mass of the sulfur-modified chloroprene rubber. When the content of the plasticizer is adjusted to this range, it is possible to obtain a vulcanizate which is excellent in scorch resistance and has reduced compression set and exothermicity while maintaining the tear strength of a sulfur-modified chloroprene rubber to be obtained.

A filler is a component which can be added as a reinforcing agent for the sulfur-modified chloroprene rubber. Examples of the filler include carbon black, silica, clay, talc, and calcium carbonate. The filler may be used alone or in combination of two or more kinds thereof.

The content of the filler is not particularly limited, and is preferably in a range of 100 parts by mass or less with respect to 100 parts by mass of the sulfur-modified chloroprene rubber. When the content of the filler is adjusted to this range, it is possible to obtain a vulcanizate which is excellent in scorch resistance and has reduced compression set and exothermicity while suitably maintaining the molding processability of the sulfur-modified chloroprene rubber composition.

The Mooney viscosity (ML₁₊₄, 100°C) of the sulfur-modified chloroprene rubber composition is not particularly limited, and is preferably in the following range. The Mooney viscosity is preferably 10 or more, 15 or more, 20 or more, 25 or more, or 30 or more, from the viewpoint of easily maintaining the processability of the sulfur-modified chloroprene rubber composition. The Mooney viscosity is preferably 80 or less, from the viewpoint of easily maintaining the processability of the sulfur-modified chloroprene rubber composition. From these viewpoints, the Mooney viscosity is preferably 10 to 80 or 20 to 80. The Mooney viscosity may be 25 or more or 30 or more. The Mooney viscosity may be 75 or less, 70 or less, 65 or less, 60 or less, 55 or less, or 50 or less. The Mooney viscosity of the sulfur-modified chloroprene rubber composition can be adjusted by the addition amount of the plasticizer, the time and the plasticization temperature of the plasticization step, and the like.

A vulcanizate of the present embodiment is a vulcanizate of the sulfur-modified chloroprene rubber of the present embodiment or a vulcanizate of the sulfur-modified chloroprene rubber composition of the present embodiment, and can be obtained by subjecting the sulfur-modified chloroprene rubber of the present embodiment or the sulfur-modified chloroprene rubber in the sulfur-modified chloroprene rubber composition to a vulcanization treatment.

A molded article of the present embodiment is a molded article made of the vulcanizate of the present embodiment and can be obtained by molding the vulcanizate of the present embodiment. Examples of the molded article include a transmission belt, a conveyor belt, a vibration-proof rubber, an air spring (for example, an automobile air spring), a hose (a hose product), and a sponge (a sponge product). A molded article may be obtained by, after mixing the constituents (such as the sulfur-modified chloroprene rubber, the metal compound, the plasticizer, and the filler) of the sulfur-modified chloroprene rubber composition, molding in a desired shape and then performing a vulcanization treatment. Furthermore, a molded article may be obtained by, after mixing the constituents of the sulfur-modified chloroprene rubber composition, performing a vulcanization treatment and then molding in a desired shape. The constituents of the sulfur-modified chloroprene rubber composition can be mixed using a roll, a banbury mixer, an extruder, or the like.

### Examples

Hereinafter, the present invention will be more specifically described on the basis of Examples. Examples described below are only typical exemplary Examples of the present invention and the scope of the present invention is not restricted thereby at all.

### <Preparation of sulfur-modified chloroprene rubber>

### (Example 1)

To a polymerization tank having an inner volume of 30 L, 100 parts by mass of chloroprene, 0.55 parts by mass of sulfur, 120 parts by mass of pure water, 4.00 parts by mass of disproportionated potassium rosinate (manufactured by Harima Chemicals, Inc.), 0.60 parts by mass of sodium hydroxide, and 0.6 parts by mass of a sodium salt of β-naphthalene sulfonic acid formalin condensate (trade name "DEMOL N": manufactured by Kao Corporation) were added. The pH of the aqueous emulsion before polymerization initiation was 12.8. 0.1 parts by mass of potassium persulfate was added as a polymerization initiator, and then emulsion polymerization was performed under a nitrogen flow at a polymerization temperature of 40°C. 0.05 parts by mass of diethylhydroxyamine as a polymerization terminator was added at the time point of a conversion rate of 85% to terminate the polymerization, thereby obtaining a chloroprene polymer solution.

To the polymer solution thus obtained, a plasticizer emulsion, which was composed of 5 parts by mass of chloroprene (solvent), 1 part by mass of N-cyclohexyl-2-benzothiazole sulfenamide (plasticizer, trade name "NOCCELER CZ": manufactured by OUCHI SHINKO CHEMICAL INDUSTRIAL CO., LTD.), 2 parts by mass of diisopropylxanthogen disulfide (plasticizer, trade name "SANBIT DIX": manufactured by SANSHIN CHEMICAL INDUSTRY CO., LTD.), 0.05 parts by mass of a sodium salt of β-naphthalene sulfonic acid formalin condensate (emulsifier), and 0.05 parts by mass of sodium laurylsulfate (emulsifier), was added, thereby obtaining a sulfur-modified chloroprene polymer latex before plasticization. In this operation, from the viewpoint that plasticization can be more stably performed, a plasticizer emulsion in an emulsified state was obtained by adding sodium laurylsulfate or the like to a plasticizer solution, which was obtained by dissolving a plasticizer in chloroprene (solvent), and then this plasticizer emulsion was added to the polymer solution.

The sulfur-modified chloroprene polymer latex thus obtained was distilled under reduced pressure to remove unreacted monomers, and then was plasticized at a temperature of 50°C for 1 hour while being stirred, and thereby a crude rubber containing the sulfur-modified chloroprene rubber (latex after plasticization) was obtained. The "crude rubber" is a sulfur-modified chloroprene rubber composition which may contain an unreacted plasticizer or the like.

### [Analysis of content of terminal functional group]

The crude rubber was cooled, and then the polymer was isolated by a common freeze-solidification method to obtain a sulfur-modified chloroprene rubber. On the basis of the total amount of the sulfur-modified chloroprene rubber, the content of the terminal functional group derived from N-cyclohexyl-2-benzothiazole sulfenamide represented by Formula (A1) below (thiazole terminal species A1) was 0.15% by mass, and the content of the terminal functional group derived from diisopropylxanthogen disulfide represented by Formula (B1) below (xanthogen terminal species B1) was 0.14% by mass.

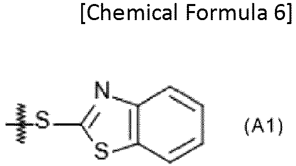

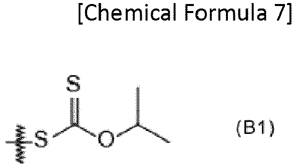

The content of the terminal functional group in the sulfur-modified chloroprene rubber was quantified by the following procedure. First, the sulfur-modified chloroprene rubber was purified with benzene and methanol and then freeze-dried again to obtain a sample for measurement. ¹H-NMR measurement was performed using this sample for measurement according to JIS K-6239. The measurement data thus obtained were corrected on the basis of the peak (7.24 ppm) of chloroform in deuterated chloroform used as a solvent. On the basis of the corrected measurement data, the area of each of peaks having peak tops at 7.72 to 7.83 ppm, 5.60 to 5.75 ppm, and 1.30 to 1.45 ppm was calculated to quantify the content of the terminal functional group.

### [Measurement of residual amount of plasticizer]

The content (residual amount) of the plasticizer in the crude rubber with respect to 100 parts by mass of the sulfur-modified chloroprene rubber was quantified by the following procedure. First, 1.5 g of the crude rubber thus obtained was dissolved in 30 mL of benzene, and then 60 mL of methanol was added dropwise thereto. Thereby, the rubber component (polymer component) was precipitated and separated from the solvent, and the liquid phase containing a non-rubber component as a solvent-soluble component was recovered. Dissolving with benzene and dropwise addition of methanol were performed again with respect to the precipitate by the same procedures, and thereby the rubber component was separated and the liquid phase containing a non-rubber component as a solvent-soluble component was recovered. The first and second liquid phases were mixed and then fixed to a constant volume of 200 mL to obtain a liquid as a sample for measurement. 20 µL of this sample for measurement was injected to a liquid chromatograph (LC, manufactured by Hitachi, Ltd., pump: L-6200, L-600, UV detector: L-4250). The mobile phase of the liquid chromatograph was used while changing the ratio of acetonitrile and water, and was flowed at a flow rate of 1 mL/min. As a column, Inertsil ODS-3 (Φ4.6 × 150 mm, 5 µm, manufactured by GL Sciences Inc.) was used. The peak detection time was checked using 0.05 ppm, 0.1 ppm, and 1.0 ppm of standard solutions of the thiazole (measurement wavelength: 300 nm) and 10 ppm, 50 ppm, and 100 ppm of standard solutions of the alkylxanthogen disulfide (measurement wavelength: 280 nm), and a quantitative value was obtained by a standard curve obtained from the peak area thereof. By comparison between this quantitative value and the amount of the sample used in analysis, the contents of the unreacted thiazole and the unreacted alkylxanthogen disulfide in the crude rubber were obtained.

### (Example 2)

A crude rubber was obtained by the same method as in Example 1, except that, as a plasticizer, the addition amount of N-cyclohexyl-2-benzothiazole sulfenamide was changed from 1 part by mass to 0.5 parts by mass, and the addition amount of diisopropylxanthogen disulfide was changed from 2 parts by mass to 4 parts by mass.

### (Example 3)

A crude rubber was obtained by the same method as in Example 1, except that, as a plasticizer, the addition amount of N-cyclohexyl-2-benzothiazole sulfenamide was changed from 1 part by mass to 2 parts by mass, and the addition amount of diisopropylxanthogen disulfide was changed from 2 parts by mass to 1 part by mass.

### (Example 4)

A crude rubber was obtained by the same method as in Example 1, except that the addition amount of N-cyclohexyl-2-benzothiazole sulfenamide as a plasticizer was changed from 1 part by mass to 3 parts by mass.

### (Example 5)

A crude rubber was obtained by the same method as in Example 1, except that, as a plasticizer, the addition amount of N-cyclohexyl-2-benzothiazole sulfenamide was changed from 1 part by mass to 0.5 parts by mass, and the addition amount of diisopropylxanthogen disulfide was changed from 2 parts by mass to 5 parts by mass.

### (Example 6)

A crude rubber was obtained by the same method as in Example 1, except that the addition amount of diisopropylxanthogen disulfide as a plasticizer was changed from 2 parts by mass to 1 part by mass.

### (Example 7)

A crude rubber was obtained by the same method as in Example 1, except that, as a plasticizer, the addition amount of N-cyclohexyl-2-benzothiazole sulfenamide was changed from 1 part by mass to 3 parts by mass, and diisopropylxanthogen disulfide was not added.

### (Example 8)

A crude rubber was obtained by the same method as in Example 1, except that, as a plasticizer, the addition amount of N-cyclohexyl-2-benzothiazole sulfenamide was changed from 1 part by mass to 0.3 parts by mass, and the addition amount of diisopropylxanthogen disulfide was changed from 2 parts by mass to 4 parts by mass.

### (Example 9)

A crude rubber was obtained by the same method as in Example 1, except that the addition amount of N-cyclohexyl-2-benzothiazole sulfenamide as a plasticizer was changed from 1 part by mass to 0.3 parts by mass, and the plasticization retention time was changed from 1 hour to 3 hours.

### (Example 10)

A crude rubber was obtained by the same method as in Example 1, except that the addition amount of N-cyclohexyl-2-benzothiazole sulfenamide as a plasticizer was changed from 1 part by mass to 1.5 parts by mass, and the plasticization retention time was changed from 1 hour to 15 minutes.

### (Example 11)

A crude rubber was obtained by the same method as in Example 1, except that the addition amount of diisopropylxanthogen disulfide as a plasticizer was changed from 2 parts by mass to 4 parts by mass, and the plasticization retention time was changed from 1 hour to 15 minutes.

### (Example 12)

A crude rubber was obtained by the same method as in Example 1, except that, as a plasticizer, N-cyclohexyl-2-benzothiazole sulfenamide was changed to N-cyclohexyl-4-methyl-2-benzothiazole sulfenamide represented by Formula (A2) below (manufactured by Chemieliva pharma & Chem Co., LTD.). On the basis of the total amount of the sulfur-modified chloroprene rubber, the content of the terminal functional group derived from N-cyclohexyl-4-methyl-2-benzothiazole sulfenamide (thiazole terminal species A2) was 0.15% by mass, and the content of the terminal functional group derived from diisopropylxanthogen disulfide represented by Formula (B1) mentioned above (xanthogen terminal species B1) was 0.17% by mass.

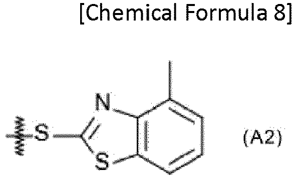

### (Example 13)

A crude rubber was obtained by the same method as in Example 1, except that, as a plasticizer, diisopropylxanthogen disulfide was changed to diethylxanthogen disulfide represented by Formula (B2) below (manufactured by Sigma-Aldrich, Inc.). On the basis of the total amount of the sulfur-modified chloroprene rubber, the content of the terminal functional group derived from N-cyclohexyl-2-benzothiazole sulfenamide represented by Formula (A1) mentioned above (thiazole terminal species A1) was 0.16% by mass, and the content of the terminal functional group derived from diethylxanthogen disulfide (xanthogen terminal species B2) was 0.13% by mass.

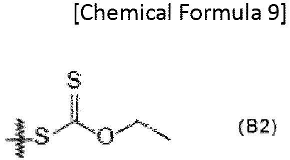

### (Example 14)

A crude rubber was obtained by the same method as in Example 1, except that, as a plasticizer, N-cyclohexyl-2-benzothiazole sulfenamide was changed to N-cyclohexyl-4-methyl-2-benzothiazole sulfenamide represented by Formula (A2) mentioned above, and diisopropylxanthogen disulfide was changed to diethylxanthogen disulfide represented by Formula (B2) mentioned above (manufactured by Sigma-Aldrich, Inc.). On the basis of the total amount of the sulfur-modified chloroprene rubber, the content of the terminal functional group derived from N-cyclohexyl-4-methyl-2-benzothiazole sulfenamide (thiazole terminal species A2) was 0.14% by mass, and the content of the terminal functional group derived from diethylxanthogen disulfide (xanthogen terminal species B2) was 0.16% by mass.

### (Comparative Example 1)

A crude rubber was obtained by the same method as in Example 1, except that, as a plasticizer, the addition amount of N-cyclohexyl-2-benzothiazole sulfenamide was changed from 1 part by mass to 3 parts by mass, and the addition amount of diisopropylxanthogen disulfide was changed from 2 parts by mass to 6 parts by mass.

### (Comparative Example 2)

A crude rubber was obtained by the same method as in Example 1, except that, as a plasticizer, the addition amount of N-cyclohexyl-2-benzothiazole sulfenamide was changed from 1 part by mass to 0.3 parts by mass, and the addition amount of diisopropylxanthogen disulfide was changed from 2 parts by mass to 0.3 parts by mass.

### (Comparative Example 3)

A crude rubber was obtained by the same method as in Example 1, except that, as a plasticizer, the addition amount of N-cyclohexyl-2-benzothiazole sulfenamide was changed from 1 part by mass to 0.5 parts by mass, and the addition amount of diisopropylxanthogen disulfide was changed from 2 parts by mass to 6 parts by mass.

### (Comparative Example 4)

A crude rubber was obtained by the same method as in Example 1, except that, as a plasticizer, N-cyclohexyl-2-benzothiazole sulfenamide and diisopropylxanthogen disulfide were changed to tetraethylthiuram disulfide represented by formula below, and the addition amount thereof was changed to 2.5 parts by mass. On the basis of the total amount of the sulfur-modified chloroprene rubber, the content of the terminal functional group derived from tetraethylthiuram disulfide was 0.26% by mass.

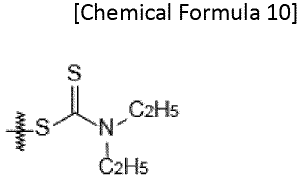

### <Measurement of Mooney viscosity>

Regarding the crude rubbers of Examples 1 to 14 and Comparative Examples 1 to 4, the Mooney viscosity (ML₁₊₄) was measured according to JIS K 6300-1 under conditions of a type-L-rotor-preheating time of 1 minute, a rotation time of 4 minutes, and a test temperature of 100°C. The Mooney viscosity of the crude rubber of Comparative Example 1 was too low and thus was unmeasurable.

### <Evaluation>

### (Preparation of sample)

1.0 part by mass of stearic acid, 2.0 parts by mass of octylated diphenylamine, 4.0 parts by mass of magnesium oxide, 40 parts by mass of carbon black (GPF), and 5.0 parts by mass of zinc oxide were mixed with 100 parts by mass of the crude rubber of each of Examples 1 to 14 and Comparative Examples 1 to 4, using an 8-inch roll, and then crosslinking under pressure was performed at 160°C for 20 minutes to prepare a sample (vulcanizate) for evaluation. In Comparative Example 1, since the Mooney viscosity of the crude rubber was too low, a sample could not be prepared, and thus each evaluation was not performed.

### (Scorch resistance)

Regarding each sample mentioned above, a Mooney scorch test was performed according to JIS K 6300-1.

### (Compression set)

Regarding each sample mentioned above, compression set was measured according to JIS K 6262 under the test condition of 100°C for 72 hours.

### (Exothermicity)

Exothermicity was evaluated by Goodrich Flexometer (Goodrich Flexometer: JIS K 6265). The Goodrich Flexometer is a test method of applying repeated dynamic load on a test piece such as vulcanized rubber and evaluating fatigue characteristics for the heat generated on the inside of the test piece, and specifically, it is a method of measuring a change in the heat generation temperature or the creep amount of the test piece over time, when a static initial load is applied to the test piece under a certain temperature condition and a sinusoidal vibration at a certain amplitude is also applied thereon. According to JIS K 6265, the calorific value (ΔT) was measured under conditions of 50°C, a deformation of 0.175 inches, a load of 55 pounds, and a frequency per minute of 1800.

### <Result>

Results of Examples are presented in the following Table 1 and Table 2, and results of Comparative Examples are presented in the following Table 3.

**[Table 1]**

| | | | Unit | Example | | | | | | |
|---|---|---|---|---|---|---|---|---|---|---|
| | | | | 1 | 2 | 3 | 4 | 5 | 6 | 7 |
| Content of terminal functional group in sulfur-modified chloroprene rubber | Terminal functional group A | Thiazole terminal species A1 | % by mass | 0.15 | 0.06 | 0.23 | 0.42 | 0.09 | 0.13 | 0.35 |
| | | Thiazole terminal species A2 | | - | - | - | - | - | - | - |
| | Terminal functional group B | Xanthogen terminal species B1 | | 0.14 | 0.28 | 0.07 | 0.12 | 0.43 | 0.06 | - |
| | | Xanthogen terminal species B2 | | - | - | - | - | - | - | - |
| | B/A | | - | 0.93 | 4.67 | 0.30 | 0.29 | 4.78 | 0.46 | 0 |
| | A+B | | % by mass | 0.29 | 0.34 | 0.30 | 0.54 | 0.52 | 0.19 | 0.35 |
| Content of plasticizer with respect to 100 parts by mass of sulfur-modified chloroprene rubber in crude rubber | Thiazole (C) | N-Cyclohexyl-2-benzothiazole sulfenamide | parts by mass | 0.0045 | 0.0010 | 0.0054 | 0.0089 | 0.0024 | 0.0028 | 0.0084 |
| | | N-Cyclohexyl-4-methyl-2-benzothiazole sulfenamide | | - | - | - | - | - | - | - |
| | Alkylxanthogen disulfide (D) | Diisopropylxanthogen disulfide | | 0.51 | 0.81 | 0.24 | 0.44 | 1.35 | 0.21 | - |
| | | Diethylxanthogen disulfide | | - | - | - | - | - | - | - |
| | D/C | | - | 113 | 810 | 44 | 49 | 563 | 75 | 0 |
| Mooney viscosity (ML₁₊₄ at 100°C) of crude rubber | | | - | 53 | 42 | 49 | 19 | 21 | 72 | 41 |
| Evaluation | Scorch time (125°C, t5) | | min | 30 | 24 | 36 | 38 | 25 | 27 | 32 |
| | Compression set (100°C 72 hr) | | % | 54 | 57 | 53 | 56 | 59 | 53 | 53 |
| | Exothermicity (ΔT) | | °C | 42 | 43 | 43 | 44 | 44 | 43 | 45 |

**[Table 2]**

| | | | Unit | Example | | | | | | |
|---|---|---|---|---|---|---|---|---|---|---|
| | | | | 8 | 9 | 10 | 11 | 12 | 13 | 14 |
| Content of terminal functional group in sulfur-modified chloroprene rubber | Terminal functional group A | Thiazole terminal species A1 | % by mass | 0.04 | 0.08 | 0.38 | 0.11 | - | 0.16 | - |
| | | Thiazole terminal species A2 | | - | - | - | - | 0.15 | - | 0.14 |
| | Terminal functional group B | Xanthogen terminal species B1 | | 0.23 | 0.21 | 0.09 | 0.35 | 0.17 | - | - |
| | | Xanthogen terminal species B2 | | - | - | - | - | - | 0.13 | 0.16 |
| | B/A | | - | 5.75 | 2.63 | 0.24 | 3.18 | 0.88 | 1.23 | 0.88 |
| | A+B | | % by mass | 0.27 | 0.29 | 0.47 | 0.46 | 0.32 | 0.29 | 0.30 |
| Content of plasticizer with respect to 100 parts by mass of sulfur-modified chloroprene rubber in crude rubber | Thiazole (C) | N-Cyclohexyl-2-benzothiazole sulfenamide | parts by mass | 0.0006 | 0.0004 | 0.0105 | 0.0062 | - | 0.0041 | - |
| | | N-Cyclohexyl-4-methyl-2-benzothiazole sulfenamide | | - | - | - | - | 0.0040 | - | 0.0033 |
| | Alkylxanthogen disulfide (D) | Diisopropylxanthogen disulfide | | 0.72 | 0.38 | 0.78 | 1.62 | 0.58 | - | - |
| | | Diethylxanthogen disulfide | | - | - | - | - | - | 0.44 | 0.56 |
| | D/C | | - | 1200 | 950 | 74 | 261 | 145 | 107 | 170 |
| Mooney viscosity (ML₁₊₄ at 100°C) of crude rubber | | | - | 58 | 52 | 26 | 24 | 46 | 48 | 46 |
| Evaluation | Scorch time (125°C, t5) | | min | 20 | 22 | 38 | 28 | 31 | 28 | 27 |
| | Compression set (100°C 72 hr) | | % | 58 | 57 | 56 | 60 | 57 | 53 | 53 |
| | Exothermicity (ΔT) | | °C | 44 | 43 | 44 | 44 | 43 | 44 | 44 |

**[Table 3]**

| | | | Unit | Comparative Example | | | |
|---|---|---|---|---|---|---|---|
| | | | | 1 | 2 | 3 | 4 |
| Content of terminal functional group in sulfur-modified chloroprene rubber | Terminal functional group A | Thiazole terminal species A1 | % by mass | 0.32 | 0.05 | 0.05 | - |
| | Terminal functional group B | Xanthogen terminal species B1 | | 0.29 | 0.04 | 0.35 | - |
| | Terminal functional group derived from tetraethylthiuram disulfide | | | - | - | - | 0.26 |
| | B/A | | - | 0.91 | 0.80 | 7.00 | - |
| | A+B | | % by mass | 0.61 | 0.09 | 0.40 | - |
| Content of plasticizer with respect to 100 parts by mass of sulfur-modified chloroprene rubber in crude rubber | Thiazole (C) | N-Cyclohexyl-2-benzothiazole sulfenamide | parts by mass | 0.0074 | 0.0010 | 0.0014 | - |
| | Alkylxanthogen disulfide (D) | Diisopropylxanthogen disulfide | | 0.84 | 0.14 | 1.44 | - |
| | D/C | | - | 114 | 140 | 1029 | - |
| Mooney viscosity (ML₁₊₄ at 100°C) of crude rubber | | | - | X | 132 | 28 | 56 |
| Evaluation | Scorch time (125°C, t5) | | min | - | 12 | 19 | 19 |
| | Compression set (100°C 72 hr) | | % | - | 63 | 61 | 61 |
| | Exothermicity (ΔT) | | °C | - | 48 | 46 | 46 |

As presented in Tables 1 to 3, it could be confirmed that vulcanizates obtained using the sulfur-modified chloroprene rubbers of Examples 1 to 14 are excellent in scorch resistance and have reduced compression set and exothermicity. Even in the case of using a thiazole, in Comparative Example 1 in which the total content (A + B) of the terminal functional groups in the sulfur-modified chloroprene rubber is more than 0.60% by mass, the Mooney viscosity was too low, and thus an evaluation sample (vulcanizate) could not been prepared.

## Claims

1. A sulfur-modified chloroprene rubber comprising a functional group A represented by General Formula (A) below and positioned at a molecular terminal, wherein
a mass ratio B/A of a content of a functional group B represented by General Formula (B) below and positioned at a molecular terminal with respect to a content of the functional group A is 6.00 or less, and
a total amount of the functional group A and the functional group B is 0.10 to 0.60% by mass. 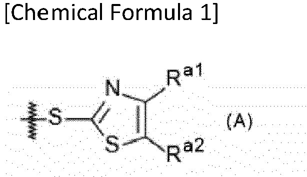 (In the formula, R^{a1} and R^{a2} each independently represent a hydrogen atom, a halogen atom, a hydroxy group, an alkoxy group, a carboxy group, a carboxylate group, a cyano group, an alkyl group which may have a substituent, or an arylthio group which may have a substituent, and R^{a1} and R^{a2} may bond with each other to form a ring which may have a substituent.) 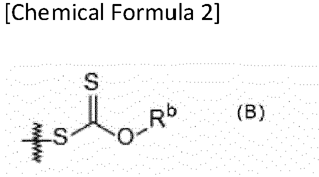 (In the formula, R^{b} represents a hydrogen atom or an alkyl group having 1 to 4 carbon atoms which may have a substituent.)

2. The sulfur-modified chloroprene rubber according to claim 1, wherein the mass ratio B/A is more than 0 and 6.00 or less.

3. The sulfur-modified chloroprene rubber according to claim 1 or 2, wherein the functional group A comprises a benzothiazole ring formed by R^{a1} and R^{a2} bonding with each other.

4. The sulfur-modified chloroprene rubber according to any one of claims 1 to 3, wherein a content of the functional group A is 0.05 to 0.40% by mass.

5. The sulfur-modified chloroprene rubber according to any one of claims 1 to 4, wherein a content of the functional group B is 0.40% by mass or less.

6. A sulfur-modified chloroprene rubber composition comprising the sulfur-modified chloroprene rubber according to any one of claims 1 to 5.

7. The sulfur-modified chloroprene rubber composition according to claim 6, wherein a content of a thiazole is 0.0005 to 0.0100 parts by mass with respect to 100 parts by mass of the sulfur-modified chloroprene rubber.

8. The sulfur-modified chloroprene rubber composition according to claim 7, wherein the thiazole comprises at least one compound selected from N-cyclohexyl-2-benzothiazole sulfenamide, N-cyclohexyl-4-methyl-2-benzothiazole sulfenamide, N-cyclohexyl-4,5-dimethyl-2-benzothiazole sulfenamide, N,N-dicyclohexyl-1,3-benzothiazole-2-sulfenamide, N-(tert-butyl)-2-benzothiazole sulfenamide, N,N-diisopropyl-2-benzothiazole sulfenamide, 4,5-dihydrothiazol-2-sulfenamide, N-cyclohexyl-4,5-dihydrothiazol-2-sulfenamide, N-oxydiethyl benzothiazole-2-sulfenamide, 2-(4'-morpholinyldithio)benzothiazole, 2-mercaptobenzothiazole, 4,5-dihydro-2-mercaptothiazole, dibenzylthiazolyl disulfide, and 2-(morpholinodithio)benzothiazole.

9. The sulfur-modified chloroprene rubber composition according to any one of claims 6 to 8, wherein a content of an alkylxanthogen disulfide is 1.50 parts by mass or less with respect to 100 parts by mass of the sulfur-modified chloroprene rubber.

10. The sulfur-modified chloroprene rubber composition according to claim 9, wherein the alkylxanthogen disulfide comprises at least one compound selected from dimethylxanthogen disulfide, diethylxanthogen disulfide, dipropylxanthogen disulfide, diisopropylxanthogen disulfide, and dibutylxanthogen disulfide.

11. The sulfur-modified chloroprene rubber composition according to any one of claims 6 to 10, wherein a mass ratio D/C of a content D of an alkylxanthogen disulfide with respect to a content C of a thiazole is 1000 or less.

12. The sulfur-modified chloroprene rubber composition according to any one of claims 6 to 11, wherein a Mooney viscosity is 20 to 80.

13. A vulcanizate of the sulfur-modified chloroprene rubber according to any one of claims 1 to 5 or a vulcanizate of the sulfur-modified chloroprene rubber composition according to any one of claims 6 to 12.

14. A molded article made of the vulcanizate according to claim 13.

15. The molded article according to claim 14, wherein the molded article is a transmission belt, a conveyor belt, a vibration-proof rubber, an air spring, a hose, or a sponge.

16. A method for producing the sulfur-modified chloroprene rubber according to any one of claims 1 to 5 or a method for producing the sulfur-modified chloroprene rubber of the sulfur-modified chloroprene rubber composition according to any one of claims 6 to 12, the method comprising:
a step of subjecting chloroprene to emulsion polymerization in the presence of sulfur to obtain a polymer; and
a mixing step of mixing the polymer and a thiazole.

17. The method for the sulfur-modified chloroprene rubber according to claim 16, wherein, in the mixing step, the polymer, a thiazole, and an alkylxanthogen disulfide are mixed.

## Patentansprüche

1. Schwefel-modifizierter Chloroprenkautschuk umfassend eine funktionelle Gruppe A mit der folgenden allgemeinen Formel (A), die an einem Molekülende positioniert ist, wobei
ein Massenverhältnis B/A eines Gehalts einer funktionellen Gruppe B mit der folgenden allgemeinen Formel (B), die an einem Molekülende positioniert ist, zu einem Gehalt der funktionellen Gruppe A 6,00 oder weniger beträgt, und
eine Gesamtmenge der funktionellen Gruppe A und der funktionellen Gruppe B 0,10 bis 0,60 Massen-% beträgt 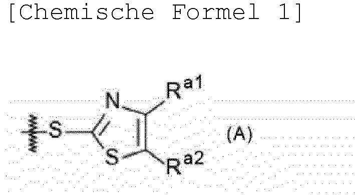 (in der Formel stehen R^{a1} und R^{a2} jeweils unabhängig für ein Wasserstoffatom, ein Halogenatom, eine Hydroxygruppe, eine Alkoxygruppe, eine Carboxygruppe, eine Carboxylatgruppe, eine Cyanogruppe, eine Alkylgruppe, die einen Substituenten aufweisen kann, oder eine Arylthiogruppe, die einen Substituenten aufweisen kann, und R^{a1} und R^{a2} können so miteinander verbunden sein, dass sie einen Ring bilden, der einen Substituenten aufweisen kann) 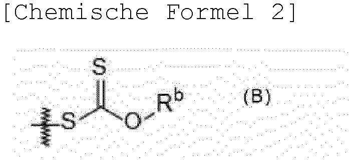 (in der Formel steht R^{b} für ein Wasserstoffatom oder eine Alkylgruppe mit 1 bis 4 Kohlenstoffatomen, die einen Substituenten aufweisen kann).

2. Schwefel-modifizierter Chloroprenkautschuk gemäß Anspruch 1, wobei das Massenverhältnis B/A mehr als 0 und 6,00 oder weniger beträgt.

3. Schwefel-modifizierter Chloroprenkautschuk gemäß Anspruch 1 oder 2, wobei die funktionelle Gruppe A einen Benzothiazolring, gebildet durch R^{a1} und R^{a2}, die miteinander verbunden sind, umfasst.

4. Schwefel-modifizierter Chloroprenkautschuk gemäß mindestens einem der Ansprüche 1 bis 3, wobei ein Gehalt der funktionellen Gruppe A 0,05 bis 0,40 Massen-% beträgt.

5. Schwefel-modifizierter Chloroprenkautschuk gemäß mindestens einem der Ansprüche 1 bis 4, wobei ein Gehalt der funktionellen Gruppe B 0,40 Massen-% oder weniger beträgt.

6. Schwefel-modifizierte Chloroprenkautschukzusammensetzung umfassend den Schwefel-modifizierten Chloroprenkautschuk gemäß mindestens einem der Ansprüche 1 bis 5.

7. Schwefel-modifizierte Chloroprenkautschukzusammensetzung gemäß Anspruch 6, wobei ein Thiazolgehalt 0,0005 bis 0,0100 Massenteile bezogen auf 100 Massenteile des Schwefel-modifizierten Chloroprenkautschuks beträgt.

8. Schwefel-modifizierte Chloroprenkautschukzusammensetzung gemäß Anspruch 7, wobei das Thiazol mindestens eine Verbindung umfasst, ausgewählt aus N-Cyclohexyl-2-benzothiazolsulfenamid, N-Cyclohexyl-4-methyl-2-benzothiazolsulfenamid, N-Cyclohexyl-4,5-dimethyl-2-benzothiazolsulfenamid, N,N-Dicyclohexyl-1,3-benzothiazol-2-sulfenamid, N-(tert-Butyl)-2-benzothiazolsulfenamid, N,N-Diisopropyl-2-benzothiazolsulfenamid, 4,5-Dihydrothiazol-2-sulfenamid, N-Cyclohexyl-4,5-dihydrothiazol-2-sulfenamid, N-Oxydiethylbenzothiazol-2-sulfenamid, 2-(4'-Morpholinyldithio)benzothiazol, 2-Mercaptobenzothiazol, 4,5-Dihydro-2-mercaptothiazol, Dibenzylthiazolyldisulfid und 2-(Morpholindithio)benzothiazol.

9. Schwefel-modifizierte Chloroprenkautschukzusammensetzung gemäß mindestens einem der Ansprüche 6 bis 8, wobei ein Gehalt eines Alkylxanthogendisulfids 1,50 Massenteile oder weniger bezogen auf 100 Massenteile des Schwefel-modifizierten Chloroprenkautschuks beträgt.

10. Schwefel-modifizierte Chloroprenkautschukzusammensetzung gemäß Anspruch 9, wobei das Alkylxanthogendisulfid mindestens eine Verbindung umfasst, ausgewählt aus Dimethylxanthogendisulfid, Diethylxanthogendisulfid, Dipropylxanthogendisulfid, Diisopropylxanthogendisulfid und Dibutylxanthogendisulfid.

11. Schwefel-modifizierte Chloroprenkautschukzusammensetzung gemäß mindestens einem der Ansprüche 6 bis 10, wobei ein Massenverhältnis D/C eines Alkylxanthogendisulfidgehalts D zu einem Thiazolgehalt C 1000 oder weniger beträgt.

12. Schwefel-modifizierte Chloroprenkautschukzusammensetzung gemäß mindestens einem der Ansprüche 6 bis 11, wobei eine Mooney Viskosität 20 bis 80 beträgt.

13. Vulkanisat des Schwefel-modifizierten Chloroprenkautschuks gemäß mindestens einem der Ansprüche 1 bis 5 oder Vulkanisat der Schwefel-modifizierten Chloroprenkautschukzusammensetzung gemäß mindestens einem der Ansprüche 6 bis 12.

14. Formartikel, hergestellt aus dem Vulkanisat gemäß Anspruch 13.

15. Formartikel gemäß Anspruch 14, wobei der Formartikel ein Transmissionsriemen, ein Förderband, ein vibrationsdichter Kautschuk, eine Luftfeder, ein Schlauch oder ein Schwamm ist.

16. Verfahren zur Herstellung des Schwefel-modifizierten Chloroprenkautschuks gemäß mindestens einem der Ansprüche 1 bis 5 oder Verfahren zur Herstellung des Schwefel-modifizierten Chloroprenkautschuks aus der Schwefel-modifizierten Chloroprenkautschukzusammensetzung gemäß mindestens einem der Ansprüche 6 bis 12, wobei das Verfahren folgendes umfasst:
einen Schritt, in dem Chloropren einer Emulsionspolymerisation in Gegenwart von Schwefel so ausgesetzt wird, dass ein Polymer erhalten wird; und
einen Mischungsschritt, in dem das Polymer und ein Thiazol gemischt werden.

17. Verfahren zur Herstellung des Schwefel-modifizierten Chloroprenkautschuks gemäß Anspruch 16, bei dem, in dem Mischungsschritt, das Polymer ein Thiazol und ein Alkylxanthogendisulfid gemischt werden.

## Revendications

1. Caoutchouc de chloroprène modifié au soufre comprenant un groupe fonctionnel A représenté par la Formule Générale (A) ci-dessous et positionné à une extrémité de molécule, dans lequel
un rapport massique B/A d'une teneur en un groupe fonctionnel B représenté par la Formule Générale (B) ci-dessous et positionné à une extrémité de molécule par rapport à une teneur en groupe fonctionnel A est inférieur ou égal à 6,00, et
une quantité totale du groupe fonctionnel A et du groupe fonctionnel B est de 0,10 à 0,60 % en masse. 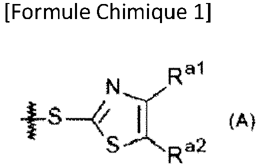 (Dans la formule, R^{a1} et R^{a2} représentent chacun indépendamment un atome d'hydrogène, un atome d'halogène, un groupe hydroxy, un groupe alcoxy, un groupe carboxy, un groupe carboxylate, un groupe cyano, un groupe alkyle qui peut présenter un substituant, ou un groupe arylthio qui peut présenter un substituant, et R^{a1} et R^{a2} peuvent se lier l'un à l'autre pour former un cycle qui peut présenter un substituant.) 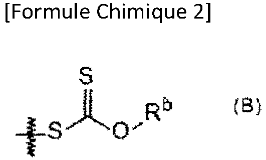 (Dans la formule, R^{b} représente un atome d'hydrogène ou un groupe alkyle présentant de 1 à 4 atomes de carbone qui peut présenter un substituant.)

2. Caoutchouc de chloroprène modifié au soufre selon la revendication 1, dans lequel le rapport massique B/A est supérieur à 0 et inférieur ou égal à 6,00.

3. Caoutchouc de chloroprène modifié au soufre selon la revendication 1 ou 2, dans lequel le groupe fonctionnel A comprend un cycle benzothiazole formé par R^{a1} et R^{a2} se liant l'un à l'autre.

4. Caoutchouc de chloroprène modifié au soufre selon l'une quelconque des revendications 1 à 3, dans lequel une teneur en groupe fonctionnel A est de 0,05 à 0,40 % en masse.

5. Caoutchouc de chloroprène modifié au soufre selon l'une quelconque des revendications 1 à 4, dans lequel une teneur en groupe fonctionnel B est inférieure ou égale à 0,40 % en masse.

6. Composition de caoutchouc de chloroprène modifié au soufre comprenant le caoutchouc de chloroprène modifié au soufre selon l'une quelconque des revendications 1 à 5.

7. Composition de caoutchouc de chloroprène modifié au soufre selon la revendication 6, dans laquelle une teneur en un thiazole est de 0,0005 à 0,0100 partie en masse par rapport à 100 parties en masse du caoutchouc de chloroprène modifié au soufre.

8. Composition de caoutchouc de chloroprène modifié au soufre selon la revendication 7, dans laquelle le thiazole comprend au moins un composé sélectionné parmi le N-cyclohexyl-2-benzothiazole sulfénamide, le N-cyclohexyl-4-méthyl-2-benzothiazole sulfénamide, le N-cyclohexyl-4,5-diméthyl-2-benzothiazole sulfénamide, le N,N-dicyclohexyl-1,3-benzothiazole-2-sulfénamide, le N-(tert-butyl)-2-benzothiazole sulfénamide, le N,N-diisopropyl-2-benzothiazole sulfénamide, le 4,5-dihydrothiazol-2-sulfénamide, le N-cyclohexyl-4,5-dihydrothiazol-2-sulfénamide, le N-oxydiéthyl benzothiazole-2-sulfénamide, le 2-(4'-morpholinyldithio)benzothiazole, le 2-mercaptobenzothiazole, le 4,5-dihydro-2-mercaptothiazole, le disulfure de dibenzylthiazolyle, et le 2-(morpholinodithio)benzothiazole.

9. Composition de caoutchouc de chloroprène modifié au soufre selon l'une quelconque des revendications 6 à 8, dans laquelle une teneur en un disulfure d'alkylxanthogène est inférieure ou égale à 1,50 partie en masse par rapport à 100 parties en masse du caoutchouc de chloroprène modifié au soufre.

10. Composition de caoutchouc de chloroprène modifié au soufre selon la revendication 9, dans laquelle le disulfure d'alkylxanthogène comprend au moins un composé sélectionné parmi le disulfure de diméthylxanthogène, le disulfure de diéthylxanthogène, le disulfure de dipropylxanthogène, le disulfure de diisopropylxanthogène, et le disulfure de dibutylxanthogène.

11. Composition de caoutchouc de chloroprène modifié au soufre selon l'une quelconque des revendications 6 à 10, dans laquelle un rapport massique D/C d'une teneur D en un disulfure d'alkylxanthogène par rapport à une teneur C en un thiazole est inférieur ou égal à 1000.

12. Composition de caoutchouc de chloroprène modifié au soufre selon l'une quelconque des revendications 6 à 11, dans laquelle une viscosité Mooney est de 20 à 80.

13. Vulcanisat du caoutchouc de chloroprène modifié au soufre selon l'une quelconque des revendications 1 à 5 ou vulcanisat de la composition de caoutchouc de chloroprène modifié au soufre selon l'une quelconque des revendications 6 à 12.

14. Article moulé composé du vulcanisat selon la revendication 13.

15. Article moulé selon la revendication 14, dans lequel l'article moulé est une courroie de transmission, une bande transporteuse, un caoutchouc anti-vibrations, un ressort pneumatique, un tuyau, ou une éponge.

16. Procédé de production du caoutchouc de chloroprène modifié au soufre selon l'une quelconque des revendications 1 à 5 ou procédé de production du caoutchouc de chloroprène modifié au soufre de la composition de caoutchouc de chloroprène modifié au soufre selon l'une quelconque des revendications 6 à 12, le procédé comprenant :
une étape de soumission de chloroprène à une polymérisation en émulsion en présence de soufre pour obtenir un polymère ; et
une étape de mélange pour mélanger le polymère et un thiazole.

17. Procédé destiné au caoutchouc de chloroprène modifié au soufre selon la revendication 16, dans lequel, dans l'étape de mélange, le polymère, un thiazole, et un disulfure d'alkylxanthogène sont mélangés.
